# EUROPEAN PATENT APPLICATION

(11) **EP 3 909 747 A1**
(43) Date of publication of application: **17.11.2021**
(21) Application number: 20190217.8
(22) Date of filing: 10.08.2020
(51) Int. Cl.: B29C 64/141, B29C 64/153, B33Y 70/00, C08G 59/22, C08G 59/40, C08G 59/44, C08G 59/50, C08J 3/12

(54) **THERMOSETTING MATERIAL FOR USE IN A 3D PRINTING PROCESS**

(30) Priority: 12.05.2020 EP 20174085
(71) Applicant: TIGER Coatings GmbH & Co. KG, 4600 Wels (AT)
(72) Inventor: KAYNAK, Baris, 4600 Wels (AT); KUBALLA, Patrick, 4600 Wels (AT)
(74) Representative: SONN Patentanwälte OG

(57) **Abstract**

The present invention relates to a thermosetting material for use in a 3D printing process comprising:
a) at least one epoxy resin A,
b) at least one elastomer-modified resin B,
c) at least one resin C with a viscosity of below 4 Pas at 150 °C,
d) at least one of a curing agent D capable of reacting with A and optionally B and/or C,
e) and optionally additional compounds
wherein said elastomer-modified resin B is a copolymer, in particular a block-copolymer, or adduct of an elastomer and a non-elastomeric resin and wherein the glass transition temperature of the uncured material is at least 30 °C, preferably at least 40 °C as measured with DSC at a heating rate of 20 °C/min.

The invention further relates to a method of producing a fully cured 3D thermoset object and the use of the above-mentioned thermosetting material in a 3D printing process.

## Description

### TECHNICAL FIELD

The present invention relates to the field of rapid prototyping, also known as 3D printing and is particularly directed to a thermosetting material for use in a 3D printing process to produce 3D thermoset objects with excellent thermal and thermo-mechanical properties, in particular glass transition temperatures and/or heat deflection temperatures of at least 80 °C. The present invention further relates to a method of producing fully cured 3D thermoset objects, 3D thermoset objects made of said material and a use of said material in a 3D printing process.

### BACKGROUND

Various 3D printing technologies and processes to obtain polymeric 3D objects exist by now, some of these processes employing exclusively liquid printing materials, such as stereolithography (SLA), hot lithography (HL) or ink jet 3D printing and some others employing exclusively solid printing materials, e.g. filaments, such as fused deposition modeling (FDM) or fused filament fabrication (FFF), or granular/powdery printing materials, such as selective laser sintering (SLS), selective heat sintering (SHS), fused granular fabrication (FGF) or electrophotographic methods. Further, there exist mixed processes employing both liquid and granular/powdery printing materials such as high speed sintering (HSS), binder jetting (BJ), composite based additive manufacturing (CBAM) and multi jet fusion (MJF). Often those latter processes employ a powdery 3D printing material as main matrix material of the 3D object and a liquid, often a kind of ink. Often, the ink is applied via an inkjet head, resulting in the desired resolution and the powder material is provided in form of a so-called powder bed. Typically, the 3D objects are obtained by building the desired object layer by layer, wherein each layer corresponds to a cross-section of said 3D object. All of the above-mentioned technologies are suitable to process the materials according to the present invention, however, without any limitation to these.

In the past, the solid polymeric 3D printing materials for above-mentioned processes were almost exclusively chosen from thermoplastic 3D printing materials, most commonly polyamides, in particular polyamide 12 (PA12) accounting by far for the major part of the global market volume. However, thermoplastic 3D objects feature significant disadvantages such as poor temperature stability, in particular warping and loss of shape upon heating close to or above its glass transition temperature. Further, the stability of these thermoplastic 3D objects towards chemicals and solvents, in particular towards swelling in solvents, is poor. In addition, thermoplastic materials that are suitable for applications at elevated temperature, such as polyetheretherketones (PEEK) are often economically unfeasible due to its high raw material cost and difficult processing behavior.

Recently, thermosetting 3D printing materials, in particular in powder or granular form, became more prominent and were introduced for certain of the above-mentioned 3D printing processes employing powders or granulates, either exclusively, or in combination with liquids, in order to overcome certain disadvantages of thermoplastic materials. However, the solid thermosetting 3D printing materials according to the state of the art still feature significant disadvantages. In particular, the 3D thermoset objects obtained therefrom have low glass transition temperatures (Tg), often in between 40 and 75 °C, and/or low heat deflection temperatures (HDT), in particular below 70 °C and often even lower, e.g. about 50 °C.

In the following, a short overview about the state of the art for solid 3D printing materials comprising thermosetting compounds and solid thermosetting 3D printing materials, is provided:
WO2008057844 discloses powder compositions, articles and methods of forming articles from powder compositions. The powder compositions include at least one polymer powder and an amount of about at least 3 weight percent reinforcing particles having an aspect ratio of preferably at least about 5:1. In a preferred embodiment, the powder composition is capable of being formed via a laser sintering process into a three-dimensional article that exhibits one or more desirable mechanical properties in an elevated temperature environment. Further, the powder compositions may also include thermosetting resins such as epoxies, acrylates, vinyl ethers, unsaturated polyesters, bismaleimides and copolymers and mixtures thereof.

EP3266593 discloses a method of producing three-dimensional structures based on thermosetting materials wherein at least one pulverulent composition containing at least one reactive component is provided and in a subsequent step the reactive component is brought to reaction, in particular crosslinked, by the entry of energy. In a preferred embodiment, the three-dimensional structure is tempered in a subsequent step. The application discloses epoxy resins as reactive component and crosslinking agents.

WO2016085914 discloses compositions for three-dimensional printing comprising a first component comprising a first functional group and a second component comprising a second functional group, wherein the second functional group is reactive with the first functional group and wherein at least one of the first functional group and the second functional comprises a saturated functional group. The saturated functional group may be an epoxy group.

WO2017046132 relates to the use of a thermosetting polymeric powder composition in a selective laser sintering (SLS) process to produce a 3D duroplast, wherein the composition comprises at least one curable polymeric binder material and wherein during each pass of the SLS process said polymeric binder material is at least partially cured within the layer thus formed and also at least partially crosslinked with the previous layer. The term "duroplast" is understood as the polymer resulting upon, at least partial, curing of a thermosetting composition; in other words, a thermoset. The polymeric binder material may comprise curable epoxy resins with different kind of crosslinking agents, such as amines or phenolic resins. The document furthermore relates to a SLS process using such a thermosetting polymeric powder composition and a 3D printing product obtained when using such a thermosetting polymeric powder composition.

Related disclosures may also be found in WO2018167067 and WO2018167065, which disclose similar compositions. In particular, WO2018167067 discloses the use of a thermosetting polymeric composition in a 3D printing process to produce a 3D duroplast, wherein the composition comprises at least one curable polymeric binder material in an amount of up to 95 wt-%, preferably up to 98 wt-%, of the total composition and at least one thermoplast having a Tg and/or Mp below the temperature provided in a pass of the printing process in an amount of between 1 and 30 wt% of the total composition and wherein during each pass of the printing process said polymeric binder material is at least partially cured within the layer thus formed and also at least partially crosslinked with the previous layer. The composition may also comprise one or more (semi)crystalline powder binder, wherein crystalline polymers are said to be useful in order to optimize the melt viscosity of the composition. Additionally, curing agents may be added to cure the polymeric binder material. The polymeric binder material may for instance be an epoxy resin that may be cured with an amine curing agent. Further, the above-mentioned thermoplast may be amorphous or (semi)crystalline and may for instance be chosen from thermoplastic resin particles, core-shell polymer particles or rubber elastomer particles. Also, thermoplastic or elastomeric filler materials may be added to the composition. However, as can be seen from Example 12 of WO2018167067, a 3D object produced from a composition comprising a (semi)crystalline polymer and a thermoplast becomes flexible already at 50 °C, meaning that the object has a glass transition temperature (Tg) of about 50 °C and only features a heat deflection temperature (HDT) of 50-52 °C at a load of 1.80 MPa. Similar thermal and thermo-mechanical properties of 3D thermoset objects are disclosed in Example 15 of WO2018167065.

WO2018167067 is considered as the closest state of the art.

Thus, there is a need for thermosetting materials that may be processed via a 3D printing process resulting in 3D thermoset objects with improved properties, in particular improved thermal and thermo-mechanical properties as compared to 3D objects obtained from state of the art thermoplastic and thermosetting materials. In particular, 3D thermoset objects with Tg and/or HDT values of above 80 °C are desirable such that the 3D objects feature sufficient dimensional stability and mechanical strength to be used for applications at elevated temperatures, even under mechanical load or stress without resulting deformation, loss of shape or melting. The problem underlying the present invention is thus to provide a thermosetting material that is suitable to be processed via a 3D printing process for the production of 3D thermoset objects with improved mechanical, thermal and/or thermo-mechanical properties, in particular with a Tg and/or an HDT value of at least 80 °C.

Further, the following properties of the obtainable 3D thermoset objects are desirable such that the 3D thermoset objects may be widely used for different industrial applications:
- good chemical stability, in particular towards acidic or basic media and towards swelling in organic and/or aqueous solvents;
- good electrical insulation properties, in particular relating to dielectric strength;
- good to excellent flame retardance up to class V0 according to UL 94;
- suitable mechanical properties for various industrial applications;
- low brittleness, or in other words sufficient flexibility and/or
- essentially isotropic properties.

3D thermoset objects obtainable from a material according to the present application, in particular featuring at least one of the properties as described above, are particularly suitable for industrial applications, in particular for the automotive, rail, aerospace and electronics industry. Of course, the desired properties largely depend on the respective application; e.g. for electronic (insulation) applications, high dielectric strength and excellent flame retardance (UL94 V0) is often required. Further, the 3D thermoset objects may be used as tools for injection molding applications.

Apart from the above-mentioned properties of the obtainable 3D thermoset object, also the following properties of the material according to the present invention are desirable:
- good print- and process-ability;
- recyclability of excess material (e.g. excess material from the powder bed or from overflow containers);
- sufficient stability during manufacture, transport and storage;
- low shrinkage, in particular below 1% upon printing and
- easy unpacking behavior from the powder bed in case of a powder bed 3D printing process (no caking).

The problem underlying the invention is solved by the subject matter as disclosed within the present application.

According to the first aspect of the herein disclosed subject matter, a thermosetting material for use in a 3D printing process is provided. As a second aspect of the herein disclosed subject matter, a method of producing 3D thermoset objects from the material according to the first aspect via a 3D printing process is provided. As a third aspect, a 3D thermoset object made of the material according to the first aspect and yet as a fourth aspect, a use of the material according to the first aspect is provided within the present application. Said aspects of the herein disclosed subject matter are specified by the independent claims. Preferred embodiments of said aspects are specified by the dependent claims.

### Short description of the invention

According to the first aspect of the herein disclosed subject matter, a thermosetting material for use in a 3D printing process is provided comprising:
a) at least one epoxy resin A,
b) at least one elastomer-modified resin B,
c) at least one resin C with a viscosity of below 4 Pas at 150 °C,
d) at least one curing agent D capable of reacting with A and optionally B and/or C,
e) and optionally additional compounds
wherein said elastomer-modified resin B is a copolymer, in particular a block-copolymer, or adduct of an elastomer and a non-elastomeric resin and wherein the glass transition temperature of the uncured material is at least 30 °C, preferably at least 40 °C, as measured with DSC at a heating rate of 20 °C/min.

Surprisingly, it was found that a material according to the first aspect of the present invention is suitable to be used in various 3D printing processes resulting in 3D thermoset objects with Tg and/or HDT values of at least 80 °C, in particular of at least 100 °C, which could not be accomplished with thermosetting materials according to the state of the art as can be seen from Table 1 and Table 4. A post-curing process may be required to obtain fully cured 3D thermoset objects, as often the 3D object is only partially cured and sometimes also not cured at all during the printing process. However, most often the Tg and HDT values are higher in case the 3D thermoset material is fully cured. Thus, the fully cured material, in particular a fully cured 3D thermoset object obtained from a material according to the first aspect of the present invention preferably features a Tg and/or HDT value of at least 80°C and more preferably at least 100 °C and most preferably at least 120 °C. Of course, the achieved curing degree upon the printing process depends largely on both the respective printing process and process parameters. Further, materials according to the first aspect of the present invention feature excellent printability and stability upon manufacture, storage, printing and post-processing. Finally, the obtainable 3D thermoset objects also have mechanical and chemical properties, which match and sometimes even exceed the respective properties of 3D thermoset or thermoplastic objects made of materials according to the state of the art as can be seen from Table 3 and Table 5. This unique set of properties is achieved by the combination of compounds A, B, C and D of the materials according to the first aspect of the present invention.

Epoxy resin A, which preferably accounts for at least 20 wt% and more preferably at least 30 wt% of the material, often serves as the primary resinous compound of the material and is crucial to achieve the desired Tg and/or HDT values, the high resistance towards chemicals and solvents, as well as good flame retardance and dielectric strength of the obtainable 3D thermoset objects. It is known that epoxy resins are capable of self-curing or in other words that epoxy resins do not require a curing agent for formation of a thermoset. However, it was found that the addition of at least one curing agent D, which preferably accounts for at least 0.1 wt%, improves the curing of epoxy resin A and thus further increases the Tg and/or HDT values and also the mechanical properties of the obtainable 3D thermoset objects. This effect is believed to be caused by an increase of the crosslinking degree and/or the crosslinking density of the 3D thermoset object. A higher crosslinking degree and/or density results in a denser polymeric network of the thermoset. As a further effect, the uptake of solvents by the 3D thermoset object may be reduced, resulting in reduced swelling of the 3D thermoset objects. Also, the resistance towards aggressive chemicals, such as acids or bases may be increased. It was also found that apart from epoxy resin A and curing agent D, the addition of a resin C, preferably in an amount of at least 1 wt%, with a viscosity of below 4 Pas at 150 °C is highly beneficial for achieving high Tg and/or HTD values as well as the desired mechanical properties. Said addition of such resin C may significantly reduce the viscosity of the entire material during the printing process and, if applicable, during the post-curing process and thus improve the coalescence of the material within a respective layer and in-between different layers. Both effects typically result in improved mechanical and thermo-mechanical properties and also in improved isotropy of said properties of the 3D thermoset objects. Further, a higher amount of fillers, such as flame retardants and inorganic filler materials, may be added without causing a too big viscosity increase of the material upon the printing and/or post-curing process(es). Too high viscosities may cause poor coalescence of the material within and in-between the printed layers and result in deteriorated and/or anisotropic properties of the 3D thermoset objects. Upon the course of development of the material it was found that 3D thermoset objects made of materials comprising only compounds A, D and C feature the problem of brittleness. This brittleness caused poor elongations at break of the 3D thermoset objects and difficult to impossible handling of the 3D thermoset objects, in particular in case of only partially cured 3D thermoset objects, upon unpacking from the powder bed or removal from the printer. This problem could be solved by addition of at least one elastomer-modified resin B, being a copolymer, in particular a block-copolymer, or adduct of an elastomer and a non-elastomeric resin, preferably in an amount of at least 1 wt%. Surprisingly, not only the above-mentioned effects were observed by addition of elastomer modified resin B, but also the agglutination or agglomeration of the material was decreased, which is particularly relevant in case the material is provided as powder or granulate. Consequently, the recyclability of excess material, in particular of excess powder of the powder bed, was enhanced and also the storage and transport stability were improved. Even more surprisingly, the addition of at least one elastomer-modified resin B to the material also reduced the warping and shrinkage of the object during the printing process, which is highly beneficial for the dimensional accuracy of the obtainable 3D thermoset objects and a smooth printing process. Finally, the ease of storage, transport and handling of the material is important for the application at industrial scale. In case the material has a glass transition temperature of at least 30 °C as measured with DSC at a heating rate of 20 °C/min, the material is sufficiently stable at ambient conditions (25 °C, 1 atm). This is particularly important in case the material is provided for as powder, granulate, filament or any other form other than as a bulk, as any agglomeration or agglutination upon storage, manufacture and handling is undesirable.

Of course, the previously mentioned benefits are even more pronounced in case the Tg of the material is at least 40 °C as measured with DSC at a heating rate of 20 °C/min. In principle, resins A, B and C may be the same or different resins or in other words, may be the same or different compounds. Also, one compound may embody the features of resin A and C and another compound may embody the features of resin B; yet alternatively, one compound may embody the features of resin A and B and another compound may embody the features of compound C and so forth. However, it is preferred that resins A, B and C are different compounds. Of course, the material may comprise further compounds, such as additives, fillers, additional resins and curing agents and so forth.

According to a preferred embodiment, the material has a minimum viscosity of 50-10000 Pas, preferably 300-5000 Pas, more preferably 500-2000 Pas and most preferably 600-1500 Pas when being heated from 25 °C to 300 °C at a heating rate of 5 °C/min by using a cone and plate viscosity measurement method according to ISO 6721-10:2015. As is commonly known for thermosetting materials, the viscosity decreases upon temperature increase, reaches a certain minimum and then starts to increase again. The increase is caused by the curing reaction and thus formation of a thermoset, which viscosity increase counteracts the typical viscosity decrease with increasing temperature that is common for polymeric materials. In contrast, thermoplastic materials do not show a viscosity minimum, yet only a decreasing viscosity upon increasing temperature. Surprisingly, it was found that a certain range of minimum viscosities of the material according to the first aspect of the present invention, in particular of 50-10000 Pas has several advantageous effects. Firstly, the coalescence within a printed layer is improved resulting in improved mechanical properties. Better coalescence within a layer improves the mechanical properties of the resulting 3D thermoset objects. Secondly, thicker layers may be printed, which is particularly advantageous for powder bed 3D printing processes. This may be achieved as on the one hand the minimum viscosity is low enough for a short period of time to provide coalescence of the printed layer and on the other hand, the start of the curing reaction and the therewith resulting viscosity increase counteracts the loss of dimensional accuracy within the printed layer. Ultimately, the possibility to print thicker layers increases the speed of the 3D printing process. Additionally, also the isotropy of the properties, in particular the thermos-mechanical and mechanical properties of the 3D thermoset objects is improved in case the minimum viscosity of the material is 50-10000 Pas.

According to a further preferred embodiment, the gel time of the material is 100-700 seconds (s), preferably 150-400 s and more preferably 200-300 s at 150 °C according to ÖNORM EN ISO 8130-6. The gel time of a thermosetting material is a measure of the reactivity of the material at a given temperature; hereunder applies, the lower the gel time, the higher the reactivity and *vice versa.* Specification of a certain range of gel time of a thermosetting material thus corresponds to specification of a certain reactivity range of the respective material. In case the gel time of the material according to the first aspect of the present invention is 100-700 s at 150°C, high coalescence within a printed layer may be achieved on the one hand and high dimensional accuracy of said layer may be preserved on the other hand. If the gel time is below 100 s at 150 °C, the material reacts too fast and only poor coalescence is achieved within the formed layer. Further, the material may react so fast that the material is almost fully or even fully cured before a subsequent layer is being printed. In that case, no or only poor interlayer crosslinking is possible, which decreases the mechanical and thermo-mechanical properties. Also, said poor or missing interlayer crosslinking typically results in anisotropic properties of the 3D thermoset objects, in particular the properties in x- and y- direction may largely deteriorate from the very same properties in z-direction (typically the printing direction). However, isotropic properties of the 3D thermoset objects are desirable. Additionally, a material with a gel time below 100 s at 150°C is such reactive that pre-reactions upon manufacture, storage and in particular of excess material of the 3D printing process are very likely to occur. These pre-reactions upon storage and manufacture may result in undesired coagulation of the material, or in particular in case the material is provided in powder or granular form, in the undesirable formation of clumps or chunks. In case the gel time is above 700 s at 150 °C, the reactivity of the material is very low, which may cause a loss of dimensional accuracy during the printing process. Further, the curing degree of the printed 3D thermoset object may be such low, that it may be impossible to remove the object from the printer, in particular from a powder bed, without damaging the object before it can be subjected to a post-curing process, as often such 3D thermoset objects with very low curing degrees are very brittle.

According to a further preferred embodiment, the glass transition temperature of elastomer-modified resin B and resin C deviates at most 15 °C, preferably at most 10 °C from the glass transition temperature of epoxy resin A. Such selection of resin A, B and C was surprisingly found to be particularly advantageous because the softening of the individual resins occurs rather simultaneously within a narrow temperature range. Thus, the material melts uniformly and the coalescence within a layer is improved, which again may improve the mechanical and thermo-mechanical properties.

According to a particularly preferred embodiment, epoxy resin A is or comprises a bisphenol-based epoxy resin, a phenolic epoxy resin, a Novolac epoxy resin or a mixture thereof. The above-mentioned resins were found to be particularly suitable to be employed as epoxy resin A because Tg and/or HDT values of about 130 °C to 150 °C could be achieved in case these resins were employed. It is believed that the high aromatic content, which is typically present in these kinds of resins, results in an inflexible polymeric backbone, which ultimately cause the above-mentioned advantageous properties. Further, these resins do not show any decomposition or degradation at temperatures of 150 °C and above, which makes them suitable for applications at elevated temperatures.

According to a further particularly preferred embodiment, the elastomer-modified resin B is or comprises an elastomer modified epoxy resin and more preferably a rubber and/or CTBN-modified epoxy resin. If the elastomer-modified resin B is an epoxy resin, or in other words comprises epoxy groups, resin B is capable of reacting with curing agent D and usually also with epoxy resin A. Consequently, the elastomer modified resin B is incorporated into the polymeric network of the thermoset, which yet again increases the crosslinking density of the thermoset. This increased crosslinking density may further increase the Tg and/or the HDT value of the obtainable 3D thermoset objects. Further advantages of increased crosslinking density have already been discussed previously within the present application and also apply here in full analogy.

According to a further preferred embodiment, resin C is or comprises an epoxy resin, preferably a (semi)crystalline epoxy resin or a polycyclic aromatic ring based epoxy resin including any partially or fully hydrogenated derivatives thereof, in particular a naphthalene and/or anthracene and/or phenantrene and/or phenaline and/or tetracene based epoxy resin. In case resin C is an epoxy resin, it is capable of reacting with curing agent D and usually also with epoxy resin A and in case elastomer-modified resin B is also an epoxy resin, also with resin B. Consequently, resin C may be incorporated into the polymeric network of the thermoset, which yet again increases the crosslinking density of the thermoset. This increased crosslinking density may further increase the Tg and/or the HDT value of the obtainable 3D thermoset objects. Further advantages of increased crosslinking density have already been discussed previously within the present application and also apply here in full analogy. (Semi)crystalline epoxy resins are particularly suitable, as their viscosity drops drastically above the melting point of their crystalline domains and thus the viscosity of the entire material may be significantly reduced above said melting point. Further, the polycyclic aromatic ring based epoxy resin including any partially or fully hydrogenated derivatives thereof were found to be particularly suitable to be employed as resin C, because these resins feature on the one hand low viscosities at 150 °C and on the other hand may significantly improve the Tg and/or HDT values of the obtainable 3D thermoset objects. These beneficial effects are believed to be caused by the high (aromatic) ring content, and in particular by the fused (aromatic) rings, causing a stiff and inflexible polymeric backbone of said resins. Naphthalene and/or anthracene and/or phenantrene and/or phenaline and/or tetracene based epoxy resin are being preferably employed.

According to a further preferred embodiment, resin C is or comprises a (semi)crystalline polyester resin and more preferably an acid-functional (semi)crystalline polyester resin. (Semi)crystalline polyester resins are particularly suitable to be employed as resin C because their viscosity drops drastically above the melting point of their crystalline domains and thus the viscosity of the entire material may be significantly reduced above said melting point. Preferably said (semi)crystalline polyester resin is an acid functional polyester resin, because the acid group may react with the epoxy groups of epoxy resin A and optionally also with other compounds of the material. As a result, the (semi)crystalline polyester resin is incorporated into the polymeric network of the thermoset, which yet again increases the crosslinking density of the thermoset. Beneficial effects of increased crosslinking density have been discussed previously within the present application and apply here in full analogy.

According to a particularly preferred embodiment, resin C is or comprises a (semi)crystalline acid functional polyester resin and a polycyclic aromatic ring based epoxy resin including any partially or fully hydrogenated derivatives thereof, in particular a naphthalene and/or anthracene and/or phenantrene and/or phenaline and/or tetracene based epoxy resin. Surprisingly, it was found that the combination of said resins resulted not only in the above-mentioned benefits of the individual resins but additionally to a synergistic effect, resulting in decreased brittleness, or in other words, higher flexibility of the 3D thermoset objects. Said effect could not be observed, in case only one of the components was present in the material.

According to a further preferred embodiment, the curing agent D is or comprises an amine-functional compound, in particular an aliphatic amine compound and/or an aromatic amine compound, and/or an amide-functional compound, in particular a dicyandiamide-based compound. It was found that the above curing agents are particularly suitable to cure the material according to the first aspect of the present invention, in particular to cure epoxy resin A, resulting in Tg and/or HDT values of at least 80 °C of the cured material and 3D thermoset objects. Additionally, addition of these curing agents favors the partial curing of the material during a 3D printing process, which facilitates the removal of the partially cured 3D object from the printer, in particular from a powder bed and also the removal of excess material from the partially cured 3D thermoset object is facilitated. Also, these curing agents may react with other epoxy groups or epoxy resins that are present in the composition, e.g. in case elastomer modified resin B and/or resin C are epoxy resins, resulting in a high crosslinking density and a dense polymeric network of the thermoset; the advantages of which have been previously described within the present application.

Aliphatic amine-functional compounds show high reactivity with epoxy groups, such as from epoxy resin A. Said high reactivity may even be increased by addition of additional curing agents, in particular suitable catalysts (e.g. Lewis acids or Lewis bases) to the material. This high reactivity of aliphatic amine curing agents particularly favors the partial curing of the material during 3D printing processes, as usually only a short time exposure of the material with the required energy (e.g. by scanning with a laser beam) for the curing reaction is given. Contrary, aromatic amine based compounds, such as imidazoles, or amide functional compounds, in particular dicyandiamide based compounds, tend to react slower with epoxy groups as compared to aliphatic amine functional curing agents. As a result, the curing reaction of these compounds with epoxy resin A and optionally other compounds of the material predominantly occurs during a post-curing process.

According to a preferred embodiment, the curing agent D is or comprises an aliphatic amine functional compound and at least one of an amide functional compounds, in particular a dicyandiamide-based compound, and an aromatic amine functional compound, in particular an imidazole based compound. In case the curing agent D is or comprises said combination of compounds, the curing reaction of the curing agent D with other compounds of the material, in particular epoxy resin A, occurs stepwise, e.g. partial curing during the 3D printing process and full curing upon post-curing or also stepwise curing during the 3D printing process itself. Stepwise curing means in other words that the individual compounds of the curing agent D have different reactivity with epoxy resin A or optionally also with other compounds of the material. A curing reaction most often is an exothermic reaction, meaning that energy, most often in form of heat, is released in the course of the reaction. However, as the reaction occurs stepwise, also the release of energy, in particular heat, occurs stepwise. This stepwise release of heat disfavors undesired agglutination or agglomeration, so called caking, and also undesired curing reactions of excess material (= any material that is not part of a printed layer/cross-section of a 3D thermoset object). Thus, the dimensional accuracy of the obtainable 3D thermoset objects, as well as the reuse/recyclability of excess material (e.g. excess material of a powder bed) may be improved. Additionally, a smaller amount of the more reactive compound of the curing agent is present in the composition, resulting in improved storage and transport stability as compared to a material comprising the high reactive compound alone as curing agent. These technical benefits are particularly relevant in case the material is provided for in powder or granular form, and in particular in case the printing process employs the material as a powder bed. Of course, this idea may also be executed by a person skilled in the art by using a combination of other suitable compounds as curing agent D, which feature different reactivity with epoxy resin A and optionally other compounds of the composition. It is hereby favorable that the curing agent comprises a first compound D1 and a second compound D2, wherein D1 has a higher reactivity with epoxy resin A and optionally with other compounds of the material as compared to D2.

According to a particularly preferred embodiment, the curing agent D comprises a first compound D1, which predominantly reacts with epoxy resin A in the course of the 3D printing process and a second curing compound D2, which predominantly reacts with epoxy resin A in the course of the post-curing process. Typically, and in particular in the case of SLS by using printing conditions that are suitable for materials according to the first aspect of the present invention, the curing reaction of the first compound D1 with epoxy resin A occurs predominantly in the course of the 3D printing process, if the curing reaction of said first compound D1 with epoxy resin A starts between 70 and 110 °C. The start of a curing reaction may be measured with DSC at a heating rate of 20 °C/min and is to be understood as the onset of an exothermic peak in the DSC-measurement caused by said curing reaction. Contrary, the curing reaction of the second compound D2 with epoxy resin A occurs predominantly in the course of the post-curing process if the curing reaction of said second compound D2 with epoxy resin A starts above 110 °C, preferably between 120 and 200 °C and more preferably between 120 and 170 °C.

Thus in a preferred embodiment, the curing agent D comprises a first compound D1 and a second compound D2, wherein the first compound D1 starts reacting with epoxy resin A at 70-110 °C and the second compound D2 starts reacting with epoxy resin A at a temperature of above 110 °C, preferably between 120 and 200 °C and more preferably between 120 and 170 °C.

As already mentioned previously, the 3D thermoset objects may be obtained from the material via known 3D printing process, such as SLS, FGF, FDM, CBAM, powder bed 3D printing processes and the like. In principle, the material may be not cured at all, partially cured or even fully cured during said 3D printing process but it was found that partial curing of the material during the 3D printing process is particularly advantageous. Nevertheless, in order to achieve the desired properties, in particular Tg and/or HDT values of at least 80 °C, the 3D thermoset objects made of the material according to the first aspects usually need to be fully cured. At least the properties may be further improved in case the 3D thermoset object is fully cured.

Thus, in a second aspect of the present invention, a method of producing a fully cured 3D thermoset object is provided wherein said method comprises at least the steps of
a. subjecting the material according to the first aspect to a 3D printing process;
b. obtaining a partially cured 3D thermoset object and;
c. subjecting the partially cured 3D thermoset object to a post-curing process, comprising a heat treatment, to fully cure the 3D thermoset object.

It was found that partial curing of the material during the 3D printing process has several benefits. As the partial curing occurs not only within a formed layer but also between layers, the interlayer adhesion is improved, which on the one hand reduces the brittleness and on the other hand improves the mechanical strength of the partially cured 3D object. Consequently, the object may be removed easier from the printer, in particular from a powder bed, without causing damage to the 3D object, as compared to a non-cured object. Also, removal of excess material from the partially cured 3D object is facilitated as compared to a non-cured (e.g. only sintered) object, without damaging the object because said removal of material often requires application of mechanical force via brushing and/or sandblasting or the like. On the other hand, full curing of the 3D object in the course of the printing process may release large quantities of heat, due to the exothermal curing reaction, which may cause excess material that is not part of a printed layer/cross-section of the 3D object, in particular in case of a powder bed printing process, to sinter and or even to prereact; both of which is undesirable, as on the one hand the dimensional accuracy of the 3D object may be reduced and on the other hand the reuse/recyclability of excess material may be reduced or may even be not possible at all. Also, removal of excess material from the object or removal of the object from a powder bed may be difficult as the object may has been strongly sintered together or even worse, may has reacted and may thus be chemically cross-linked with excess material due to the large amount of released heat. Additionally, as is commonly known, the Tg of a thermoset material usually increases with its curing degree. Thus, the difference in Tg of the uncured material to a partially cured material is usually smaller as compared to the difference in Tg of an uncured material to a fully cured material. Often, the printing temperature of the material e.g. within the powder bed (= powder bed temperature) is close to the Tg of the uncured material (e.g. about 50-70 °C). The temperature of the material in the course of the printing process might be slightly below but preferably is slightly above (e.g. 5 or 10 °C or even up to 15 °C above) the Tg of the uncured material. A layer/cross-section of a 3D object is then usually formed by short and precise exposure of the material to energy (e.g. heat and/or radiation) or to another external stimulus, which causes the desired sintering/agglutination and (partial) curing of the material in the course of the process. However, a large difference (e.g. 30 or 50, or even 80 °C) in Tg of the uncured material to the fully cured printed 3D thermoset object causes the problem of curling during the printing process, which goes hand in hand with a loss of dimensional accuracy of the process and distortion of said object. In case of a powder bed 3D printing process, it may become impossible to provide a fresh layer of powder on top of an already printed layer of powder as the printed object may even protrude from the surface of the powder bed due to said curling effect. However, in case the object is only partially cured during the printing process, said difference in Tg may be significantly reduced and curling may be efficiently reduced or even fully prevented. Then, in the course of the post-curing step, the partially cured 3D thermoset object is fully cured. A heat treatment step in the course of said post-curing is essential as thereby the sintering of the material and thus its coalescence is enhanced and also the interlayer adhesion is further increased. This again increases the mechanical, thermo-mechanical and thermal properties of the obtained 3D thermoset objects. Additionally, the isotropy of previously mentioned properties may be improved by the heat treatment step. Of course, the heat treatment step may also cause the complete curing of the material, as epoxy resin A may react with itself, with curing agent D and optionally also with other components of the material (e.g. with component B, C, reactive fillers, etc.). The heat treatment may be done via a classical convection oven or by means of IR radiation, e.g. in an IR oven or a combination of IR and convection ovens may be used. Also, any other process that is capable to heat up the object may be employed. Typically, the heat treatment comprises a ramp up phase, during which the object is slowly heated up (e.g. 1 °C /min), a hold phase, during which a certain temperature (e.g. 180 °C) is held for a certain time (e.g. 2 hours) and a cool down phase (e.g. 1 °C/min), during which the object is slowly cooled down to ambient temperature (25 °C) again. Alternatively, the object may only be put in a preheated convection oven (e.g. 170 °C) for a certain period of time (e.g. 3 hours) and then quickly cooled down to ambient temperature. However, also any other heat treatment may be employed which is capable to fully cure the 3D thermoset object. It may also be helpful, in order to avoid loss of the dimensional accuracy or shape or any kind of deformation of the 3D object, to add a mechanical support to the object or put the object in a support medium, e.g. sand or glass beads, during the heat treatment step. Apart from the heat treatment, the post-curing may also comprise a radiation (e.g. UV or electron beam (EB)) and/or pressure treatment to fully cure the 3D thermoset object and/or to improve the coalescence of the material.

According to a preferred embodiment, the heat treatment comprises heating the 3D thermoset object to a temperature of at least 110 °C, preferably 120-300 °C, more preferably 130-250 °C and most preferably 140-200°C. Not only good coalescence of the material is achieved at such temperatures but also full curing may be achieved, in particular in case the curing agent comprises not only a high reactive compound D1 but also a less reactive compound D2. Care has to be taken that on the one hand, the temperature is sufficiently high and the treatment is performed for a long enough period of time to achieve a fully cured 3D thermoset object, but on the other hand that the temperature is not such high that the 3D thermoset object starts to decompose. The latter may happen in case the temperature of the heat treatment step is raised above 300 °C.

According to a third aspect of the present invention, a 3D object produced from a material according to the first aspect of the present invention is provided. Such object may be obtained by subjecting the material according to the first aspect to a suitable 3D printing process, as described previously herein. However, also any other process, such as injection molding or the like, may be employed to obtain the 3D object. Such process just needs to be capable to form a 3D object out of a material according to the first aspect. Such object, whether produced by a 3D printing process or any other suitable process, may be non-cured, partially cured or fully cured, wherein a fully cured 3D thermoset object is preferable, as these typically feature the desired mechanical, thermo-mechanical and thermal properties. Such fully cured 3D thermoset objects may for instance be obtained by a method according to the second aspect of the present invention.

According to a fourth aspect of the present invention, a use of a material according to the first aspect in a 3D printing process, preferably in a SLS, FDM, CBAM, FGF or powder bed 3D printing process, and more preferably a SLS process, is provided. As previously mentioned, the material according to the first aspect is particularly suitable to be processed via a 3D printing process and 3D objects according to the third aspect may be obtained.

### Detailed description of the invention

In the following, the invention is described in more detail and by means of examples in order to further illustrate the idea behind and the scope of the present invention. By no means, the invention shall be regarded as being limited to the provided examples.

As the material according to the first aspect of the present invention features a Tg of at least 30 °C, the material is solid at ambient temperature and conditions (25 °C, 1 atm). Thus, the material is preferably provided in form of a powder, a granulate or a filament, as these forms are suitable for many of the known 3D printing processes. However, the material may of course also be provided in any other suitable form. In case the material is provided as powder or granulate, or in other words as a multitude of particles, the material may be formulated as one component (1C) material, two component (2C) material or even multi component (3C, 4C, ...) material, wherein 1C and 2C materials are particularly preferred. In case of 2C or multi component materials, the reactive compounds of the material are spatially separated (e.g. component 1 comprises epoxy resin A and component 2 comprises curing agent D). Only upon melting of both components, the curing reaction of epoxy resin A and curing agent D may occur. Due to this limitation of reactivity, the stability of the materials during manufacture, storage and transport may be further improved. Also, the recyclability/reusability of excess material, in particular excess material from a powder bed or overflow containers, may be greatly enhanced. In principle, said concept may also be employed in case the material is provided for as filaments or any other form different from a bulk.

**[Epoxy resin A]** In principle, various epoxy resins may be employed as epoxy resin A. Epoxy resin A preferably accounts for at least 20 wt% preferably at least 30 wt%, more preferably at least 40 wt%, even more preferably at least 50 wt% and most preferably at least 55 wt%, e.g. 60 wt% or 65 wt% of the material according to the first aspect of the present invention. Yet, preferably, epoxy resin A accounts for 30-80 wt%, preferably 40-70 wt%, more preferably 45-65 wt%, e.g. 62 wt% of the material. Preferably, epoxy resin A has an epoxy equivalent weight (EEW) of at least 150 g/eq, more preferably of at least 350 g/eq. An EEW of 350-1000 g/eq of epoxy resin A is particularly preferred. It turned out to be particularly advantageous if epoxy resin A has a Tg of at least 40 °C, preferably at least 45 °C and more preferably at least 50 °C. As epoxy resin A most often is used as main resinous component of the material, the Tg of the entire material largely depends on the Tg of epoxy resin A. Thus, by employing an epoxy resin A with a Tg of at least 40 °C, the Tg of the entire material may be increased. Also, epoxy resins A with a softening point of at least 60 °C, preferably of at least 80 °C and in particular between 80 and 150 °C, preferably between 85 and 120 °C, are preferably used. Further, it is preferred if epoxy resin A features a viscosity of at least 1 Pas at 150 °C. Preferably, the functionality of the epoxy resin A is on average at least two, preferably at least three. Bisphenol-based epoxy resins, phenolic epoxy resins and/or Novolac epoxy resins are preferably used as epoxy resin A.

According to a particularly preferred embodiment, epoxy resin A is or comprises an epoxy resin which features an EEW of 350-1000 g/eq and a Tg of at least 40 °C, preferably a softening point of at least 60 °C and/or a viscosity of at least 1 Pas at 150 °C, and accounts for 30-80 wt% of the material.

Suitable commercially available compounds that may exemplary be employed as epoxy resin A, alone or in combination, are D.E.R. 6225 HT (DOW Chemical Company), softening point = 87-95 °C, EEW = 650-725 g/eq, viscosity = 0.8-1.6 Pas (150 °C); D.E.R. 642U-20 (DOW Chemical Company), softening point = 89-97 °C, EEW = 500-560 g/eq, viscosity = 1.9-3.3 Pas (150 °C); D.E.R. 6510 HT (DOW Chemical Company), EEW = 400-450 g/eq, viscosity = 7.5-9.5 Pas (150 °C); Kukdo KD-213 (Kukdo Chemical Co, Ltd.), softening point = 88-98 °C, EEW = 730-840 g/eq, viscosity = 3.5-7.0 Pas (150 °C); Araldite GT6064 (Huntsman Corporation), softening point = 96-101 °C, EEW = 730-780 g/eq, viscosity = 0.5-0.7 Pa*s (175 °C).

**[Elastomer-modified resin B]** In principle, various elastomer-modified resins may be employed as elastomer-modified resin B. Elastomer-modified resin B preferably accounts for at least 1 wt%, more preferably at least 5 wt% and even more preferably at least 6 wt%, e.g 6.5 or 7 wt% of the material according to the present invention. Yet, preferably, elastomer modified resin B accounts for 1-30 wt%, preferably 5-20 wt%, more preferably 6-15 wt% and most preferably 6.5-12 wt% of the material, e.g. 7.5 wt%. Advantageously, elastomer-modified resin B is a curable resin, in particular an acid, in particular carboxy, functional resin or an epoxy resin, wherein epoxy resins are particularly preferred as elastomer-modified resin B. Preferably, elastomer modified resin B has an epoxy equivalent weight (EEW) of at least 600 g/eq, more preferably of at least 800 g/eq and most preferably of at least 900 q/eq. EEWs of between 900 and 1500 g/eq of elastomer-modified resin B are particularly preferred. It turned out to be particularly advantageous if the elastomer-modified resin B has a softening point of at least 60 °C, preferably of at least 80 °C and in particular between 80 and 150 °C, preferably between 85 and 120 °C. Preferably, the functionality of the elastomer-modified resin B is on average at least two, preferably at least three. Further, it was found that an elastomeric content of the elastomer-modified resin B advantageously is 20-60 wt%_{(ec)}, preferably 20-50 wt%_{(ec)}, more preferably 25-40 wt%_{(ec)}, and most preferably 30-35 wt%_{(ec)}, e.g. 30 or 33 wt%_{(ec)}. Preferably, the elastomer-modified resin B is or comprises a rubber-modified resin and/or carboxyl-terminated butadiene-acrylonitrile (CTBN) modified resin, wherein resin B preferably is an epoxy resin.

According to a preferred embodiment, elastomer-modified resin B is or comprises an epoxy resin, features an EEW of at least 800 g/eq, and accounts for 1-30 wt% with respect to the total material and preferably is selected from rubber modified epoxy resins and/or CTBN modified epoxy resins.

According to a particularly preferred embodiment, elastomer-modified resin B is epoxy-functional and features an EEW of 900-1500 g/eq, preferably has a softening point of at least 60 °C and/or an elastomeric content of 20-60 wt%_{(ec)}, and accounts for 1-30 wt% of the material and preferably is selected from rubber modified epoxy resins and/or CTBN modified epoxy resins.

Suitable commercially available compounds that may exemplary be employed as elastomer-modified resin B, alone or in combination, are D.E.R.858 (Olin Corporation), softening point = 95-105 °C, EEW = 380-420 g/eq, viscosity = 2800-4200 Pas (150 °C); FORTEGRA 104 (Olin Corporation), softening point is not measurable; EEW = 960-1060 g/eq, viscosity = 4500-9500 Pas (150 °C); FORTEGRA 304 (Olin Corporation), softening point = 105-115 °C; EEW = 920-1090 g/eq, viscosity = 8000-23000 Pas (150 °C); KSR-1000 (KUKDO), EEW = 1100-1300 g/eq, viscosity = 1000-5000 Pas (175 °C); KR-102 (KUKDO), EEW = 1100-1300 g/eq, viscosity = 3000-15000 Pas (175 °C); HyPox RK84L (Huntsman), EEW = 1250-1500 g/eq, viscosity = 300-500 Pas (T).100°C)

**[Resin C]** In principle, various resins with a viscosity of below 4 Pas at 150 °C may be employed as resin C. Preferably, the viscosity of resin C is below 2 Pas, more preferably below 1.5 Pas and most preferably below 1.1 Pas, e.g. 0.9 Pas at 150 °C. Resin C preferably accounts for at least 1 wt%, more preferably at least 4 wt% and even more preferably at least 6 wt%, e.g 7 or 9 wt% of the material. Preferably, resin C accounts for 1-25 wt%, preferably 4-20 wt%, more preferably 6-15 wt% and most preferably 8-12 wt% of the material, e.g. 10 wt%. It was found to be beneficial if resin C is a (semi)crystalline resin as due to the rather sharp melting point of (semi)crystalline resins, the melt viscosity of resin C drops dramatically upon a temperature increase at or above said melting point. As a consequence, the viscosity of the entire material may significantly decrease at or closely above the melting point of the (semi)crystalline resin. Advantageously, resin C is a curable resin, in particular an acid, in particular carboxy (COOH), functional or hydroxy (OH) functional resin or an epoxy resin, wherein epoxy resins and acid functional resins are particularly preferred. Preferably, acid functional resins feature an acid value (AV) of 10-100, more preferably 20-50 mg KOH/g and hydroxyl function resins feature a hydroxyl value (HV) of 10-300, preferably 15-200 and more preferably 20 to 100 mg KOH/g. Among the acid and/or hydroxyl functional resins, polyesters, in particular semi(crystalline) polyester, are preferred. However, also other resins with a viscosity of below 4 Pas at 150 °C may be employed. Among the epoxy resins, resins with an EEW of 50-500 g/eq, preferably between 100 and 400 g/eq, are preferably used. Particularly preferred epoxy resins as resin C are (semi-)crystalline epoxy resins and/or polycyclic aromatic ring based epoxy resins including any partially or fully hydrogenated derivatives thereof. Among the polycyclic aromatic ring based epoxy resins, naphthalene, anthracene, phenanthrene, phenaline and/or tetracene based epoxy resins including any partially or fully hydrogenated derivatives thereof are preferably employed. Such epoxy resins turned out to be particularly efficient to adjust, in particular decrease, the viscosity of the material. Preferably, the functionality of resin C is on average at least two, preferably at least three.

According to a preferred embodiment, resin C is or comprises an epoxy resin, which features an EEW of 80-500 g/eq, has a viscosity of below 4 Pas, preferably below 2 Pas at 150 °C and accounts for 1-30 wt% of the material.

According to a particularly preferred embodiment, resin C is or comprises an epoxy resin, which features an EEW of 80-500 g/eq, has a viscosity of below 4 Pas, preferably of below 2 Pas at 150 °C, accounts for 1-30 wt% of material and is selected from semi(crystalline) epoxy resins and polycyclic aromatic ring based epoxy resins, in particular naphthalene, anthracene, phenanthrene and/or phenaline based epoxy resins, including any partially or fully hydrogenated derivatives thereof.

According to a further particularly preferred embodiment, resin C comprises a first resin and second resin. The first resin is an epoxy resin, features an EEW of 80-500 g/eq, has a viscosity of below 4 Pas, preferably below 2 Pas at 150 °C, accounts for 1-29 wt%, preferably 5-20 wt% of the total material and is selected from semi(crystalline) epoxy resins and polycyclic aromatic ring based epoxy resins, in particular naphthalene, anthracene, phenanthrene and/or phenaline based epoxy resins, including any partially or fully hydrogenated derivatives thereof. The second resin is polyester resin, which is preferably semi(crystalline) and preferably carboxy functional with an acid value of 10-100 mg KOH/g, preferably 20-50 mg KOH/g, has a viscosity of below 4 Pas, preferably below 2 Pas at 150 °C, and accounts for 1-29 wt%, preferably 5-20 wt% of total material.

Suitable commercially available compounds that may exemplary be employed as resin C, alone or in combination, are: Kukdo KD-2011 (epoxy resin, softening point = 90-100 °C, EEW = 400-500 g/eq, viscosity = 1.0-3.5 Pas (150 °C) Kukdo Chemical Co. Ltd); Epiclon HP-4710 (epoxy resin, softening point = 96 °C, EEW = 171 g/eq, viscosity = 1.0 Pas (150 °C), DIC Corporation); D.E.R. 671 (epoxy resin, softening point = 75-85 °C, EEW = 475-550 g/eq, viscosity = 0.4-0.95 Pas (150 °C), DOW Chemical Company); D.E.R. 692 (epoxy resin, softening point = 89-97 °C, EEW = 660-720 g/eq, viscosity = 1.6-2.4 Pas (150 °C), DOW Chemical Company); Araldite GT6064 (epoxy resin, softening point = 82-90 °C, EEW = 600-700 g/eq, viscosity = 0.6-1.5 Pas (150 °C), Huntsman); Sirales PE 5900 ((semi)crystalline, carboxy functional polyester, AV = 28-36 mgKOH/g, Tg < 0 °C, viscosity = 1.5 Pas (150 °C) Mp = 110 °C, SIR Industriale); Epiclon 152 (epoxy resin, softening point = 56-66 °C, EEW = 340-380 g/eq and viscosity = 1.0 Pas (150 °C), DIC Corporation).

**[Curing agent D]** In principle, various curing agents, which are capable of reacting with epoxy resin A, may be employed. Typical curing agents are compounds such as crosslinking agents, catalysts and/or initiators. The curing agent D may comprise a multitude of the before mentioned compounds, such as a crosslinking agent and a catalyst, two different crosslinking agents, two different crosslinking agents and a catalyst, a catalyst and an initiator, a crosslinking agent, a catalyst and an initiator and so forth. Thus, the curing agent D may also be regarded as a curing system, which is chosen such that the curing behavior of the material is suitable for the respective application and/or 3D printing process. Suitable crosslinking agents are compounds that carry functional groups that are capable of reacting with epoxy resin A, such as amines, amides, in particular dicyandiamides, acids and acid-anhydrides, in particular carboxylic acids and the respective anhydrides, unsaturated bonds, in particular vinyl or allyl groups and so forth. Suitable catalysts are compounds that increase or enable the curing reaction of the epoxy resin A, either with itself or with any other compound, in particular a crosslinking agent, that is present in the material. Such typical catalysts may be Lewis-basic or Lewis-acidic compounds, in particular heteroaromatic compounds comprising a Lewis-basic nitrogen atom such as imidazole and imidazoline compounds. A suitable initiator is a compound that initiates the curing reaction within the material by formation of a reactive species, e.g. radicals and/or acids and/or ions, in particular cations. Such suitable initiators may thus exemplary be radical initiators, super acid generators and/or ion-forming compounds, in particular cationic initiators. By such reaction of curing agent D with epoxy resin A, chemical crosslinking occurs and an at least partially cured thermoset material is formed. Preferably, the curing agent D is chosen such that said chemical crosslinking occurs in the course of the 3D printing process and/or the post-curing process. Typically, the curing is induced by the input of energy, such as heat, radiation and/or pressure, wherein heat and/or radiation curing is particularly preferred. In case of heat curing, temperatures of 50-300 °C, preferably 70-200 °C are often employed. In case of radiation curing, infrared (IR)/visible (VIS)/ultra-violet (UV) radiation is most often used. The curing agent D may also be reactive with elastomer-modified resin B and/or resin C and optionally also with other compounds of the material, such as reactive fillers. In a preferred embodiment, curing agent D is capable of reacting with epoxy resin A, elastomer-modified resin B and resin C.

Curing agent D preferably accounts for at least 0.1 wt%, more preferably at least 1 wt% and even more preferably at least 3 wt%, e.g 4 or 6 wt% of the material. Preferably, curing agent D accounts for 0.1-10 wt%, preferably 0.1-8 wt%, more preferably 0.5-7 wt% and most preferably 1-6 wt% of the material, e.g. 5 wt%.

Suitable commercially available compounds that may exemplary be employed as curing agent D, alone or in combination, are:
- Crosslinking agents: Aradur 835 (amine functional, Huntsman); EPIKURE™ P-104 (accelerated dicyandiamide, Hexion); 2-Ethylimidazol (Donau Chem.); DYHAERD® 100S (dicyandiamide, Alz Chem); CUREZOL 2MZ (SHIKOKU), imidazole type hardener; CUREZOL 1B2PZ (SHIKOKU), imidazole type hardener; OMICURE DDA 5 (CVC Thermoset Specialities), dicyandiamide; OMICURE 33-DDA (CVC Thermoset Specialities), diaminodiphenylsulfone;
- Catalysts: Eutomer B31 (Whyte Chemicals), Dyhard® UR300 CUREZOL C17Z (SHIKOKU).
- Initiators: BENOX®A-75 (United Unitiators); PEROXAN AEC (PERGAN GmbH); PEROXAN PK295P (PERGAN GmbH)

**[Filler]** Various fillers may optionally be employed for the material according to the present invention. As the filler may strongly influence the properties of the material and the obtained 3D thermoset objects therefrom, the choice of the filler strongly depends on the desired application. Of course, the filler may comprise a multitude of different filler compounds. The filler usually accounts for at least 5 wt%, preferably at least 10 wt% and more preferably at least 20 wt%, e.g 25 or 30 wt% of the material according to the present invention. However, the material may also be free of fillers. Preferably, the filler accounts for 5-60 wt%, preferably 10-50 wt%, more preferably 15-45 wt% and most preferably 20-40 wt% of the material, e.g. 32 wt%. Also, the filler may comprise functional fillers comprising functional groups, that are capable of reacting with itself or with any other compounds present in the composition, in particular epoxy resin A, elastomer-modified resin B, resin C and/or curing agent D.

Organic and/or inorganic fillers may be employed. Also, the filler may comprise a coloring agent, such as pigments and/or dyes, although pigments are preferably used. Further, the filler may comprise a flame retardant compound, which may significantly improve the flame retardance properties of the 3D thermoset objects. Organo-phosphorus based flame retardants are preferably used. Such flame retardant compounds are preferably used in an amount of 5-30 wt%, preferably 7-25 wt% and more preferably 9-20 wt% with respect to the total material. By employing such flame retardants, 3D thermoset objects with excellent flame retardance properties, in particular up to class V0 according to UL 94, may be obtained. This is particularly desirable for electronic, in particular for insulating, and automotive applications.

Suitable types of fillers that may exemplary be employed, alone or in combination, are: glass fibers, glass beads, hollow glass bubbles, caolin, talc, zeolite, wollastonite, graphene, calcium carbonate, silicon carbide, carbon, carbon nanotubes, silica, silicates, metal oxides, aluminum oxide, mica, titanium dioxide, carbon fiber, elastomers, thermoplasts, cellulose.

According to a preferred embodiment, the material comprises an inorganic filler, in particular caolin, talc, titanium dioxide, silica, silica based compounds, inorganic silicates and/or wollastonite.

Suitable commercially available compounds that may exemplary be employed as filler, alone or in combination, are:
- Inorganic fillers: Aktifit AM (Hoffmann Mineral GmbH) amino silane functionalized kaolinite, D50 = 2µm; Silfit Z 91 (Hoffmann Mineral GmbH), mixture of silica and kaolinite, D50 = 2µm; Tremin 283 (Quarzwerke GmbH), silane functionalized wollastonite, D50 = 12µm; Tremin 939 (Quarzwerke GmbH), fiber like wollastonite, D50 = 23µm; Microglass 9110 (Fibertec Inc.), glass fibers, D50 = 75µm; Si-Tuff SF-1 (Haydale Ceramic Technologies LLC.), deagglomerated silicon carbide microfibers, D50 = 11µm; Silatherm 1360 (Quarzwerke GmbH), aluminosilicate, D50 = 22µm; Portafill® A40 (Sibelco Europe), aluminum hydroxide, D50 = 11.5µm; Portaryte B10 (Sibelco Europe), barite, D50 = 2.6µm; Silibeads AIR 8070-77 (Sigmund Lindner GmbH) Hollow Glass Beads, D50 = 30µm; Silibeads SOLID 5210-7 (Sigmund Lindner GmbH) Micro Glass Beads, D50= 25µm.
- organic fillers: Expancel 551 DE 40 (AkzoNobel), thermosplastic microspheres, D50 = 40µm; Staphyloid AC 4030 (Danick Specialties & Support, Inc), core-shell filler, D50 = 0.3 µm; Nexylon® (EMS-Group), PA 66 fibre; Nexlene® (EMS-Group) PPS fibre.
- flame retardants: Organic Phosphinates: Exolit® OP1230 (Clariant), Exolit® OP 930 (Clariant), STRUKTOL® Polyphlox® 3710 (Schill+Seilacher "Struktol" GmbH); Organic phosphorous modified epoxy resin: STRUKTOL® Polyphlox® 3735 (Schill+Seilacher "Struktol" GmbH); STRUKTOL® Polyphlox® 3742 (Schill+Seilacher "Struktol" GmbH).

**[Additional Resins]** The material may comprise further resins other than resins A, B and C. These resins may be curable or non-curable resins, however curable resins are preferred. These curable resins may be reactive with any of components A, B, C and/or D but also additional curing agents for these additional resins may be employed. Preferably, these additional resins comprise functional groups that are capable of reacting with at least one of components A, B, C and D. These functional groups preferably are chosen from amines, amides, acids, in particular carboxylic acids, hydroxyls, acid anhydrides, in particular carboxylic acid anhydrides and mixtures thereof. Carboxyl functional polyester resins, which are preferably amorphous, are particularly preferred. Further suitable additional resins are for example polyacrylates, polyamidimids, polyesters, polyethers, polyesteramides, benzoxazines, bemaleimids, polyimides, polyamides, phenolic resins, fluoro-resins, halogenated resins, silicone resins, and polyphenylensulfid resins.

According to a particularly preferred embodiment, the material additionally comprises at least one polyester resin, which is preferably amorphous with a Tg of at least 40 °C, preferably at least 50 °C, and preferably has an AV of 10 - 100, preferably 20 - 80 mgKOH/g, and/or a Mw of 1000 - 20000, preferably 2000-15000 g/mol. Preferably said polyester resins accounts for at least 5 wt%, preferably 5 - 50 wt%, more preferably 10 - 40 wt%, and most preferably 15 - 35 wt& of the material.

**[Additives]** Of course, the material according to the present invention may optionally comprise various kinds of additives as are known in the art such as flow additives, out-gassing (= degassing) additives, absorbers, synergists, adhesion promoters, light stabilizers, UV stabilizers, inhibitors, anti-caking additives, fluidizing additives, structuring agents, scratch resistance additives, slip additives, dispersing agents, process additives, plasticizers, thixotropic agents, viscosity adjusting agents, and the like.

**[Production of the material]** The material according to the present invention may be produced by any kind of process that allows sufficient dispersion of the individual compounds, e.g. melt mixing processes as are known in the art such as extrusion. Care has to be taken in order to avoid pre-reactions of the material during the manufacturing process; thus, the temperature of the individual process steps needs to be tightly controlled and kept below the curing temperature of the material. In the following, a typical procedure to produce a material in powder or granular form according to the present invention is described. Of course, a filament or the like made of the material may be produced in a similar way.

According to a preferred embodiment, the material is provided in powder or granular form. Typically, a material in powder form has a d50 of 5-500 µm, preferably 10-100 µm, more preferably 20-80 µm and most preferably 30-60 µm, whereas a material in granular form is coarser, in particular has a d50 of above 500 µm.

The raw materials, comprising epoxy resin A, elastomer modified-resin B, resin C, curing agent D and optionally further compounds such as fillers and additives are provided and uniformly blended (e.g. in a mixing device). Then, the mixture is being melt mixed, e.g. by extrusion or melt mixing in a heated vessel, in order to obtain a well-dispersed mixture (e.g. an extrudate in case an extrusion process is employed), which mixture is then crushed and/or milled in order to get a multitude of discrete particles of the material.

Surprisingly, it was found that in case the material in powder or granular form is subjected to a so-called bonding process, the flowability of the powdery or granular material according to the present invention and consequently the ease of use during a 3D printing process and the smoothness of a powder bed may be significantly improved. Without being bound to theory, it is believed that this is caused be an increase of the sphericity of the particles (or in other words: the spherical-like shape), by the application of shear forces in combination with the heat treatment close to or slightly above the Tg of the material.

**[3D printing process]** In principle, the material according to the present invention may be used for various 3D printing processes to produce 3D thermoset objects. Depending on the 3D printing process, the material may be provided as a powder, a granulate, a filament or any other shape that is suitable for the respective process. However, according to preferred embodiment, the material according to the first aspect of the present invention is provided for in powder or granular form or as a filament. Suitable 3D printing processes are for instance those as listed in the Background part of this application and may be found in 3D printing handbooks and literature which are known to a person skilled in the art. Preferably, the material according to the present invention is used in SLS, SHS, CBAM, FGF, powder bed 3D printing processes and other processes similar to or derived from the before mentioned ones, most preferably, however, the material according to the first aspect of the present invention is used in SLS processes.

**[Post-curing]** Basically, any kind of treatment, comprising a heat treatment step that is capable to fully cure the non-cured or partially cured printed 3D objects may be used. A typical posttreatment and post-curing procedure, in case of an SLS process, is as follows: After the printing process, the objects are unpacked from the powder bed by hand, brushed and sandblasted. Afterwards, the objects are post-cured in a convection oven by using the following temperature program: 30 minutes at 80 °C (oven was preheated before), 15 minutes at 120 °C (heating rate 1 °C/min) and further 15 minutes at 160 °C (heating rate 1 °C/min). Then the fully cured 3D thermoset objects are slowly cooled to ambient temperature (25 °C).

### DEFINITIONS

Any definition shall be analogously applied to any deduction of a defined term given hereunder within the present application; e.g. the definition of "curing" shall be analogously be applied for terms such as "curable", "cured" and the like.

**[Single-component material]** This term is to be understood as a material comprising a multitude of particles of one polymeric component. It is also referred to as a (1C) material.

**[Multi-component material]** This term is to be understood as a material comprising a multitude of particles of at least two polymeric components. A multi-component material essentially consisting of particles of two components, component A and component B, is referred to as a two-component (2C) material. A multi-component material essentially consisting of particles of three components, component A, component B and component C, is referred to as a three-component (3C) material and so on.

**[Aromatic content]** This term is to be understood as the weight ratio of aromatic monomers to non-aromatic monomers that are incorporated into a resin. The aromatic content is given in wt%_{(ac)} within the present application.

**[Curing]** This term is to be understood as the formation of a thermoset from thermosetting components, in particular from a thermosetting material by e.g. chemical crosslinking or other suitable reactions.

**[Curing agent]** This term is to be understood as a compound or a mixture of compounds that reacts in any form with a curable resin to form a thermoset by curing the curable resin, at least partially. Exemplary examples of curing agents are crosslinking agents, catalysts, initiators and mixtures thereof.

**[Resin]** This term is to be understood as a polymer, oligomer copolymer or mixture thereof. The terms polymer, oligomer, copolymer and resin are used synonymously within the present application unless stated otherwise. A resin may also be a mixture of different resins.

**[Curable resin]** This term is to be understood as a resin comprising functional groups, such as hydroxyl, acid, amine, amide, epoxy, unsaturated bonds and the like, that may react with a curing agent or another curable resin or any other compound comprising suitable functional groups to form a thermoset. The functionality of a curable resin is on average at least greater than 1, preferably at least 2.

**[Epoxy resin]** This term is to be understood as a curable resin comprising epoxy group(s).

**[Polyester (resin)]** This term is to be understood as a resin comprising at least two ester functionalities in its polymeric backbone.

**[(Semi)-crystalline compound (e.g. resin)]** This term is to be understood as a compound comprising crystalline domains and optionally amorphous domains. A crystalline compound is free of amorphous domains, whereas a semi-crystalline compound comprises both amorphous and crystalline domains. Further, a (semi)-crystalline compounds exhibits a rather sharp melting point according to classical thermodynamics.

**[Elastomer]** This term is to be understood as a polymeric material, which can be deformed elastically and whose Tg is below its application temperature, typically below 25 °C. An elastomer is capable to be deformed upon application of pressure or tension but does, upon release of the applied external stress, return to its original shape.

**[Elastomer-modified resin]** This term is to be understood as a copolymer, typically a block copolymer, or adduct of a resin and an elastomer, wherein said resin is not an elastomer. In other words, a copolymer or adduct of an elastomer and a non-elastomeric resin. The elastomer-modified resin may be a curable resin.

**[Elastomeric content]** This term is to be understood as the weight ratio of the elastomer to the total weight of the elastomer-modified resin and is given in wt%_{(ec)} within the present application.

**[Polyether (resin)]** This term is to be understood as a resin, typically an epoxy resin, having at least two ether functional groups within the backbone of the resin.

**[Melt/melting]** This term is to be understood as the transition from a solid state into a state that enables at least a certain flow, in particular viscous flow, of a compound/composition/material. This term shall in no way be limited to the strictly thermodynamic understanding of "melting" or a "melting point", meaning a sharp phase transition of a pure, crystalline compound from a crystalline, solid state, to a liquid state at a well-defined, sharp temperature.

**[Bonding]** This term is to be understood as the application of shear forces to a material in powder or granular form that is heated to a temperature around the Tg of the material, e.g. by use of a special bonding mixer.

**[wt%]** If not stated otherwise within the present application, this term is to be understood to refer to the weight percentage of the specific compound with respect to the total material.

Further, it is noted that any embodiment may be combined with any other embodiment(s), irrespectively if these embodiments concern the same or different aspects of the subject matter provided within the present application. The same holds true for individual features of the respective embodiments.

### BRIEF DESCRIPTION OF THE FIGURES

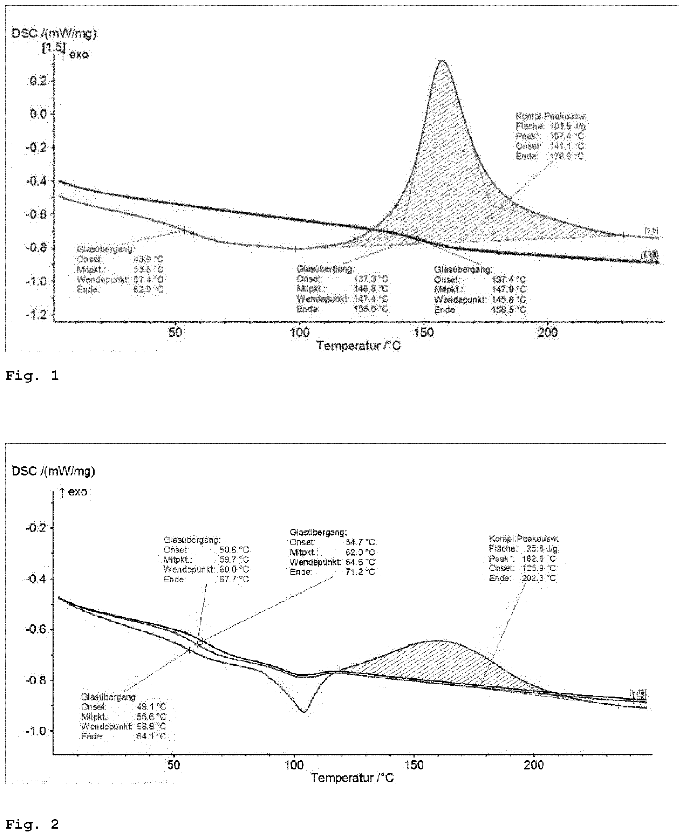

**Fig. 1** shows typical DSC curves of a material according to the present invention. The Tg of the uncured material is 43.9 °C, whereas the Tg of the fully cured material is 137.3 °C. The curing can clearly be observed by the presence of the exothermic reaction starting at about 100 °C. In the second and third DSC-run, no further exothermic reaction is observed, indicating that the material is fully cured.
**Fig. 2** shows typical DSC curves of a material according to the state of the art. The Tg of the uncured material is 49.1 °C, whereas the Tg of the cured material is only 50.6 °C in the second run and 54.1 in the third run. The curing can clearly be observed by the presence of the exothermic reaction starting at about 110 °C. In the second and third DSC-run, no further exothermic reaction is observed, indicating that the material is fully cured. The slight shift of Tg from the second to the third run indicates, however, that some residual curing occurred during the second run.

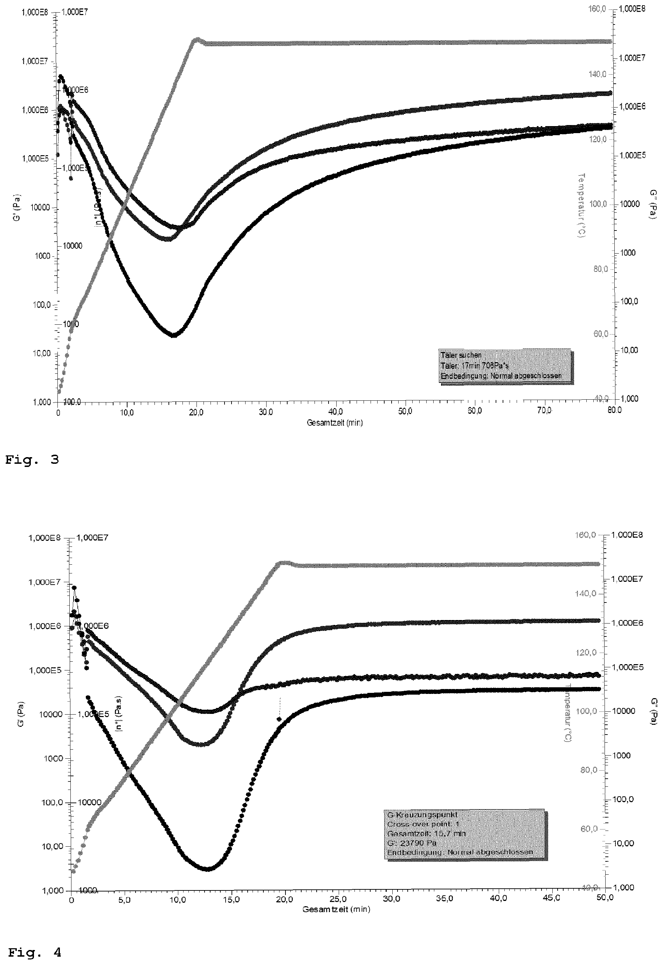

**Fig. 3** shows a typical viscosity measurement of a material according to the present invention. The black line with the lowest minimum shows the viscosity. The temperature increase is shown by the grey line. As can be seen, the viscosity first decreases, reaches a minimum and then starts to increase as a result of the curing of the material. The minimum viscosity of the material is about 700 Pas at about 130 °C.
**Fig. 4** shows a typical viscosity measurement of a thermosetting material according to the state of the art and can be interpreted identical to Fig. 3. The minimum viscosity of the material is about 24000 Pas at about 110 °C.

### MEASURMENT METHODS

**[Acid value (AV)]** The term acid value or acid number (AV) is defined as the mass of potassium hydroxide (KOH) in milligrams that is required to neutralize one gram of chemical substance. The acid value is a measure of the amount of acid groups in a chemical compound, such as an acid functional polyester, or in a mixture of compounds. Typically, a known amount of sample is dissolved in organic solvent and is then titrated with a solution of potassium hydroxide (KOH) with known concentration and with phenolphthalein as a color indicator. The acid value (AV) is determined analogously to ÖNORM EN ISO 2114 with the difference that a mixture of 28 parts of acetone and 1 part of pyridine (% w/w) is used as a solvent.

**[Hydroxyl value (HV)]** The term hydroxyl value or hydroxyl number (HV) is the value which is defined as the number of milligrams (mg) of potassium hydroxide required to neutralize the acetic acid taken up on acetylation of one gram of a chemical substance that contains free hydroxyl groups. The hydroxyl value is a measure of the content of free hydroxyl groups in a chemical substance, usually expressed in units of the mass of potassium hydroxide (KOH) in milligrams equivalent to the hydroxyl content of one gram of the chemical substance. The analytical method used to determine hydroxyl value preferably involves acetylation of the free hydroxyl groups of the substance in organic solvent. After completion of the reaction, water is added, and the remaining unreacted acetylation reagent, which is preferably acetic anhydride, is hydrolyzed and measured by titration with potassium hydroxide. The hydroxyl value is determined according to ÖNORM EN ISO 4629.

**[Average particle size (d50)]** The average particle size d50, also known as the median diameter or the medium value of the particles size distribution (PSD) is to be understood as the particle size at 50% of a cumulative distribution. For example, a d50 value of 60 µm means that 50% of the particles are larger than 60 µm and 50% of the particles are smaller than 60 µm. The d50 value is determined by laser diffraction using a Malvern Mastersizer Scirocco 2000 manufactured by Malvern Panalytical GmbH. D50, d50, d(50), D(50)and the like are used synonymously herein.

**[Epoxy equivalent weight (EEW)]** The epoxy equivalent weight (EEW) is defined as the mass of a compound or a mixture of compounds that contains one (1) mol of epoxy groups. A high EEW means a low content of epoxy groups within the sample. The EEW is usually provided by the manufacturer of the epoxy resins and may be determined according to ASTM D-1652 .

**[Weight average molecular weight (Mw)]** The weight average molecular weight (Mw) is a statistic number relating to molecular weight distribution of a chemical sample, typically a resin as defined herein. Mw may, for instance, be determined by gel permeation chromatography or mass spectrometry as is known in the art.

**[Reuse percentage (%re)]** The reuse percentage (%re) is defined as the mass ratio of recycled powder (e.g. from the powder bed or from overflow containers) to the total powder composition (consisting of fresh and recycled powder) to be used in a 3D printing process. For example, in case a powder composition consists of 30% recycled powder and 70% fresh powder, the reuse percentage is calculated as follows: 30/(70+30)^{∗}100% = 30 %re.

**[Glass transition temperature (Tg)]** The glass transition temperature (Tg) is the gradual transition from an amorphous or (semi)crystalline material from a hard and brittle (glassy) state into a rubbery state. The glass transition temperature (Tg) of a compound/material is determined by differential scanning calorimetry (DSC) using a NETZSCH, DSC 204 F1 Phoenix with sample weights between 7 and 10 mg and a heating and cooling rate of 20 DSC. The samples were heated/cooled, preferably under nitrogen atmosphere. The Tg is determined by evaluating the point of onset of the endothermal step.

**[Heat deflection temperature (HDT)]** The heat deflection temperature, also known as heat distortion temperature, is the temperature at which a polymeric sample deforms under a specified flexural stress. The HDT is determined with a VIC-2450 machine from Zwick Roell according to ISO 75-2:2013, wherein method A of said norm is employed and referred to exclusively herein. Said method employs a flexural stress of 1.80 MPa. So any reference to an HDT value is a reference to an HDT-A value.

**[Mechanical properties]** The mechanical properties (tensile strength, tensile modulus and elongation at break) of the 3D objects were measured according to DIN EN ISO 527 on a Shimadzu AGS-10kNXD series testing machine equipped with a load cell of 10 kN. The crosshead speed was 1 mm/min for the determination of the E Modulus, which was obtained by linear regression in the strain range between 0.1 and 0.25 %. After reaching 0.25 % strain, the crosshead speed was increased to 50 mm/min for the remainder of the test.

**[Curing degree]** The curing degree is defined as the value obtained by dividing the heat of reaction of the partially cured material by the heat of reaction of the fully cured material. The heat of reaction can be obtained from DSC measurements of the respective material at a heating rate of 20 °C/min. Of course, same amounts (by weight) of sample of the uncured and partially cured material have to be used. Alternatively, the curing degree can be estimated by the shift in Tg of the partially cured material to a fully cured materials as compared to the uncured material.

A partially cured material or 3D thermoset object is defined as having a curing degree of between 0.0001 (0.01%) and 0.9 (90%), whereas a fully cured material or 3D thermoset object is defined as having a curing degree of above 0.9 (90%).

**[Viscosity]** The viscosity of a material is its resistance to deformation at a given rate and temperature and is measured by using the cone and plate method with a Brookfield CAP 2000+ viscometer according to ISO 6721-10:2015 with an appropriate rotational speed (e.g. 700 rpm) applied for a suitable time (e. g.: 115 seconds) and by using an appropriate spindle according to the recommendations given in the user manual of the machine manufacturer (Brookfield). The viscosity of individual compounds is often provided in the technical data sheets (TDS) of the manufacturer of a specific compound. Alternatively, the viscosity of a resin may be determined according to DIN ISO 2431.

**[Softening Point]** The softening point is the temperature at which a material softens beyond some arbitrary softness and is stated according to the manufacturer's specification (TDS) of a given compound herein. Unless specified otherwise, the softening point of said TDS is measured according to ASTM D3104.

**[Gel time]** the gel time is measure of the reactivity of a thermosetting material at a given temperature. The shorter the gel time, the faster the curing reaction occurred at the given temperature. The gel time of the material is measured in accordance with ÖNORM EN ISO 8130-6 at 150 °C.

### EXAMPLES

### Example 1:

The material was composed of D.E.R. 642U (Epoxy Resin A; 54.0 wt%, EEW = 500-560 q/eq; viscosity = 1.9-3.3 Pas (150 °C), softening point = 89 -97 °C, Dow Chemical Company), Epiclon HP-4710 (naphthalene based epoxy resin C, 5.0 wt%, softening point = 96 °C, EEW = 171 g/eq, viscosity = 1.0 Pas (150 °C), DIC Corp.); Kukdo KR-102 (rubber modified Bisphenol-A-type epoxy resin B; 15.0 wt%, EEW = 1100-1300, Kukdo Chemical Co, Ltd.); Aradur 835 CH (aliphatic polyamine curing agent, 2.0 wt.%, Huntsman), 2-Ethylimidazole (curing agent, 1.5 wt.%, Donauchem GmbH); Epikure P-108 (accelerated Dicyandiamide curing agent, 1.0 wt%, Hexion Chemicals); Aktifit AM (filler, 10.0 wt.%, Hoffmann Mineral GmbH), Benzoin = Hydroxybenzylphenyl-Ketone (degassing additive, 1.0 wt%, Harke Chemicals GmbH); Resiflow PL200 (flow additive, 2.5 wt%, Estron Chemical Inc.), TI-Select TS6200 (pigment additive, 8 wt%, DuPont Titanium Technologies). The total quantities of each compound were chosen such that 40kg of powder was obtained. All compounds were premixed in a high-speed mixer for 1 min and then extruded in a twin-screw ZSK-18 extruder at a screw speed of 400 rpm with a rear-zone temperature of 70 °C and a front-zone temperature of 90 °C. In an alternative setting of the extruder, a temperature gradient of 40 to 100 °C and a cooling device for the feeding area was used. The mixture obtained was then cooled down, granulated and fine ground to obtain a powder having a D50 of less than 80 µm. The Tg of the material was 60 °C.

### Example 2:

The material was composed identical to Example 1, but Epiclon HP-4710 was exchanged 1:1 with Sirales PE 5900 ((semi)crystalline, carboxy functional polyester, AV = 28-36 mgKOH/g, viscosity = 1.3 Pas (150 °C), Mp = 110 °C, melting range of 105-120 °C, Sir Industriale) was employed as resin C. The material was produced in full analogy to Example 1. The Tg of the material was 59°C.

### Example 3:

D.E.R.™ 6510-HT (epoxy resin A, 41.5 wt%, EEW = 400-450 q/eq, viscosity = 7.5-9.5 Pas (150 °C), softening point = 89 - 97 °C), Dow Chemical Company); Epiclon® HP-4710 (naphtalene based epoxy resin C, 12.0 wt%, softening point = 96 °C, EEW= 171 g/eq, viscosity = 1.0 Pas (150 °C), DIC Corp.); HyPox® RK84L (CTBN-modified epoxy resin B, 10.0 wt%, softening point is not measurable, EEW = 1250-1500 g/eq, viscosity = 300-500 Pas (100 °C), Huntsman), Aradur 835 CH (aliphatic polyamine curing agent D; 1.5 wt%, Huntsman), 2-Ethylimidazole (curing agent D, 0.5 wt%, Donauchem GmbH); Epikure P-108 (accelerated Dicyandiamide curing agent D, 1 wt%, Hexion Chemicals); Aktifit AM (filler, 9 wt%, Hoffmann Mineral GmbH), Benzoin (Hydroxybenzylphenyl-Ketone degassing additive, 0.5 wt%, Harke Chemicals GmbH); Resiflow PL200 (flow additive, 2.0 wt%, Estron Chemical Inc.); TI-Select TS6200 (pigment filler, 10 wt%, DuPont Titanium Technologies), Exolit® OP1230 (organic phosphinate flame retardant filler, 12 wt%, Clariant Ltd.). The material was produced in full analogy to Example 1. The Tg of the material was 63 °C.

### Example 4:

D.E.R.™ 6510-HT (epoxy resin A, 44.5 wt%, EEW = 400-450 q/eq, viscosity = 7.5-9.5 Pas (150 °C), softening point = 89 -97 °C), Dow Chemical Company); Epiclon® HP-4710 (naphtalene based epoxy resin C, 11.0 wt%, softening point = 96 °C, EEW = 171 g/eq, viscosity = 1.0 Pas (150 °C), DIC Corp.); HyPox® RK84L (CTBN modified epoxy resin B, 7.0 wt%, softening point is not measurable, EEW = 1250-1500 g/eq, viscosity= 300-500 Pas (100 °C), Huntsman); Sirales PE 5900 ((semi)crystalline polyester resin C, 7.0 wt%, acid value = 28-36 mgKOH/g, Tg < 0 °C, viscosity = 1.5 Pas (150 °C), Sir Industriale); Aradur 835 CH (aliphatic polyamine curing agent D, 1.5 wt%, Huntsman), 2-Ethylimidazole (curing agent D, 0.5 wt%, Donauchem GmbH); Epikure P-108 (accelerated Dicyandiamide curing agent D, 1 wt%, Hexion Chemicals); Aktifit AM (filler, 8 wt%, Hoffmann Mineral GmbH); Benzoin (Hydroxybenzylphenyl-Ketone degassing additive, 0.5 wt%, Harke Chemicals GmbH); Resiflow PL200 (flow additive, 2.0 wt%, Estron Chemical Inc.)M TI-Select TS6200 (pigment filler, 5 wt%, DuPont Titanium Technologies); Exolit® OP1230 (organic phosphinate flame retardant filler, 12 wt%, Clariant Ldt.). The material was produced in full analogy to Example 1. The Tg of the material was 55 °C.

Comparative Example 1 (Example 12 of WO2018167067 / Example 15 of WO2018167065):

The material was composed of "polyester 1" (27.7 wt%); D.E.R 642U (29.3 wt%, Dow Company Company); Sirales PE 5900 ((semi)crystalline polyester, 10.0 wt%, Mp = 110 °C, melting range of 105-120 °C, Sir Industriale); Eutomer B31(curing agent, 1.2 wt%, Eutec Chemical Co. Ltd.); Aradur 835 (curing agent, 4.0 wt%, Huntsman); Modaflow P6000 (additive, 1.0 wt%, Allnex); Lanco TF 1778 (additive, 0.8 wt%, Lubizol); Ti-select (pigment additive, 13.0 wt%, DuPont); Staphyloid 3832 (core-shell thermoplast filler, 5.0 wt%, AICA); Tremin VP 939-600 EST (wollastonite filler, 5 wt%, HPF); Omyacarb 1-SV (filler, 3.0 wt%, Omya). The material was produced in full analogy to Example 1. The Tg of the material was xx.56 C°

"polyester 1 " is a carboxy functional polyester having an acid number of 68-76 mgKOH/g and a viscosity of 2.0 to 3.5 Pas (200 °C), which comprises terephthalic acid, adipic acid, neopentyl glycol, monoethylene glycol and trimellitic anhydride as the essential components and was prepared by melt polymerization at a temperature of up to 240 °C.

Comparative Example 2: Commercially available thermoplastic polyamide 12 (PA12) as available from various suppliers. In here FS3300PA, available from Farsoon Technologies (Hunan Farsoon) was employed for comparison purposes. No printing test was performed.

Before performing any printing tests, the glass transition temperatures of the fully cured materials were measured in order to evaluate the suitability of the respective materials for applications at elevated temperatures. The measured Tg values are listed in Table 1:

**Table 1: Tg values of the uncured and fully cured materials**

| # | Tg [°C] uncured | Tg [°C] fully cured |
|---|---|---|
| Example 1 | 60 | 130 |
| Example 2 | 59 | 120 |
| Example 3 | 63 | 154 |
| Example 4 | 55 | 135 |
| Comparative Example 1 | 56 | 63 |
| Comparative Example 2 | 48.8 | 48.8* |

| | | |
|---|---|---|
| *Tg uncured is identical to Tg fully cured because thermoplastic P12 is not curable. | | |

### Printing Tests

In order to assess the suitability of the material according to the present invention to be used in a 3D printing process, 3D printing tests were performed. A SLS 3D printing process was chosen, as the materials according to the present invention are particularly suitable to be provided in powder form. Further, the closest state of the art also used an SLS process, which allowed easy comparison of the materials and obtainable 3D thermoset objects according to the present invention with the state of the art. However, the materials according to the present invention may be used for various 3D printing processes other than SLS.

**[SLS printing process]** A PRODWAYS ProMaker P1000 SLS 3D Printer was used for all the SLS 3D printing tests. Tensile bars according to EN ISO 527-1 were printed. The parameter settings of the SLS 3D printer are listed in Table 2.

**Table 2: SLS 3D printer parameter settings for the printing tests**

| laser power [W] | hatch distance [mm] | scan speed [mm/sec] | layer thickness [mm] | powder bed temperature [°C] | feeder temperature [°C] |
|---|---|---|---|---|---|
| 16 | 0.13 | 3500 | 0.10 | 65 | 45 |

After the 3D printing process, the objects (partially cured 3D thermoset objects) were unpacked from the powder bed by hand and sandblasted by using a Guyson Formula 1200 blast cabinet.

**[Post-curing]** The printed objects were post-cured in a convection oven (Thermo Scientific Heraeus OVEN 199L) using the following temperature program: 30 minutes at 100 °C, 15 minutes at 150 °C and further 15 minutes at 200 °C. Then the post-cured objects (fully cured 3D thermoset objects) were cooled to ambient temperature (25 °C). Finally, full curing of the 3D thermoset objects was confirmed by DSC.

### Characterization of the fully cured 3D thermoset objects

**[Mechanical properties]** The mechanical characterization of the printed objects was carried out using a commercially available tensile test (EN ISO 527-1) facility (Shimadzu AGS-10kNXD series). The following Table 3 shows the determined mechanical properties of fully cured tensile. Based on the tensile test the stroke strain, break stress and the break stroke strain were determined according to EN-ISO 527-1.

**Table 3: Mechanical properties of the fully cured tensile bars**

| # | Stroke_Strain [GPa] | Break Stress [MPa] | Break Stroke Strain [%] |
|---|---|---|---|
| Example 1 | 2.51 | 46.8 | 2.45 |
| Example 2 | 2.7 | 31 | 1.5 |
| Example 3 | 2.5 | 46 | 2.4 |
| Example 4 | 2.6 | 38 | 1.7 |
| Comparative Example 1 | 1.85 | 32.0 | 5.03 |
| Comparative Example 2 | 1.6 | 46 | 36 |

The heat deflection temperature (HDT) and the glass transition temperature (Tg) of the fully cured, inventive and comparative, 3D thermoset objects were measured and are listed in Table 3

**Table 4: HDT and Tg of the fully cured 3D objects**

| # | HDT [°C] | Tg [°C] |
|---|---|---|
| Example 1 | 100 | 130 |
| Example 2 | 98 | 120 |
| Example 3 | 132 | 154 |
| Example 4 | 110 | 135 |
| Comparative Example 1 | 49.4 | 63 |
| Comparative Example 2 | 83.5 | 48.8 |

**[Chemical test]** In order to assess the chemical stability, in particular towards swelling and dissolution, fully cured printed objects with a length of 30 mm, width of 9.75 mm and height of 4 mm were stored in different solvents for two weeks at 25 °C. The dimensions (length, width, height) of the objects were remeasured after two weeks storage in the respective solvent. The fully cured printed objects of Example 1 neither dissolved nor showed any changes in dimension after two weeks.

**Table 5 Chemical stability of fully cured printed made of a material according to Example 1**

| | Percentage variance [%] | | |
|---|---|---|---|
| Solvent | length | width | height |
| Toluene | 0 | 0 | 0 |
| Isopropanol | 0 | 0 | 0 |
| Water | 0 | 0 | 0 |
| Acetic acid | 0 | 0 | 0 |

The printed parts out of Comparative Example 1 were swelling very strongly after 24 hours storage in all solvents. Therefore, the measurement was stopped after 24 hours.

## Claims

1. A thermosetting material for use in a 3D printing process comprising:
a) at least one epoxy resin A,
b) at least one elastomer-modified resin B,
c) at least one resin C with a viscosity of below 4 Pas at 150 °C,
d) at least one of a curing agent D capable of reacting with A and optionally B and/or C,
e) and optionally additional compounds
wherein said elastomer-modified resin B is a copolymer, in particular a block-copolymer, or adduct of an elastomer and a non-elastomeric resin and wherein the glass transition temperature of the uncured material is at least 30 °C, preferably at least 40 °C as measured with DSC at a heating rate of 20 °C/min.

2. A material according to the previous claim, **characterized in that** the material has a minimum viscosity of 50-10000 Pas, preferably 300-5000 Pas, more preferably 500-2000 Pas and most preferably 600-1500 Pas when being heated from 25 °C to 300 °C at a heating rate of 5 °C/min by using a cone and plate viscosity measurement method according to ISO 6721-10:2015.

3. A material according to any of the previous claims, **characterized in that** gel time of the material is 100-700 seconds, preferably 150-400 seconds and more preferably 200-300 seconds at 150 °C according to ÖNORM EN ISO 8130-6.

4. A material according to any of the previous claims, **characterized in that** the glass transition temperature of elastomer-modified resin B and resin C deviates at most 15 °C, preferably at most 10 °C from the glass transition temperature of epoxy resin A.

5. A material according to any of the previous claims, **characterized in that** the epoxy resin A is or comprises a bisphenol-based epoxy resin, a phenolic epoxy resin, a Novolac epoxy resin or a mixture thereof.

6. A material according to any of the previous claims, **characterized in that** elastomer-modified resin B is or comprises an elastomer modified epoxy resin and more preferably a rubber and/or CTBN-modified epoxy resin.

7. A material according to any of the previous claims, **characterized in that** resin C is or comprises an epoxy resin, preferably a(semi)crystalline epoxy resin and/or a polycyclic aromatic ring based epoxy resin including any partially or fully hydrogenated derivatives thereof, in particular a naphthalene and/or anthracene and/or phenantrene and/or phenaline and/or tetracene based epoxy resin.

8. A material according to any of the previous claims, **characterized in that** resin C is or comprises a (semi)crystalline polyester resin, preferably an acid-functional (semi)crystalline polyester resin.

9. A material according to any of the previous claims, **characterized in that** resin C is or comprises a (semi)crystalline, acid functional polyester resin and a polycyclic aromatic ring based epoxy resin including any partially or fully hydrogenated derivatives thereof, in particular a naphthalene and/or anthracene and/or phenantrene and/or phenaline and/or tetracene based epoxy resin.

10. A material according to any of the previous claims, **characterized in that** the curing agent D is or comprises an amine-functional compound, in particular an aliphatic amine compound and/or an aromatic amine compound, and/or an amide functional compound, in particular a dicyandiamide-based compound.

11. A material according to any of the previous claims **characterized in that** the curing agent D comprises a first compound D1 and a second compound D2 wherein the first compound D1 starts reacting with epoxy resin A at 70-110 °C and the second compound D2 starts reacting with epoxy resin A at a temperature of above 110 °C, preferably between 120 and 200 °C and more preferably between 130 and 170 °C.

12. A method of producing a fully cured 3D thermoset object comprising at least the following steps:
a. subjecting the material according to any of claims 1-11 to a 3D printing process;
b. obtaining a partially cured 3D thermoset object and;
c. subjecting the partially cured 3D thermoset object to a post-curing process, comprising a heat treatment, to fully cure the 3D thermoset object.

13. A method according to claim 12 **characterized in that** the heat treatment comprises heating the partially cured 3D thermoset object to a temperature of at least 110 °C, preferably 120-300 °C, more preferably 130-250 °C and most preferably 140-200°C.

14. A 3D object produced from a thermosetting material according to any of claims 1-11.

15. Use of a material according to any of claims 1-11 in a 3D printing process, preferably a SLS, FDM, CBAM, FGF or powder bed 3D printing process and more preferably a SLS process.
